(19) **Europäisches Patentamt European Patent Office Office européen des brevets**

(11) **EP 1 523 838 B1**

(12) **EUROPEAN PATENT SPECIFICATION**

(45) Date of publication and mention
of the grant of the patent:
**13.06.2007 Bulletin 2007/24**

(51) Int Cl.:
*H04L 27/36* (2006.01)    *H04L 25/03* (2006.01)

(21) Application number: **02745715.9**

(22) Date of filing: **15.07.2002**

(86) International application number:
**PCT/IB2002/002775**

(87) International publication number:
**WO 2004/008707 (22.01.2004 Gazette 2004/04)**

(54) **ADAPTIVE PRE-EQUALIZATION METHOD AND APPARATUS**

METHODE UND APPARAT FÜR ADAPTIVE VORVERZERRUNG

PROCEDE ET APPAREIL DE PRE-EGALISATION ADAPTATIVE

(84) Designated Contracting States:
**AT BE BG CH CY CZ DE DK EE ES FI FR GB GR IE IT LI LU MC NL PT SE SK TR**

(43) Date of publication of application:
**20.04.2005 Bulletin 2005/16**

(73) Proprietor: **Nokia Corporation
02150 Espoo (FI)**

(72) Inventor: **COERSMEIER, Edmund
44799 Bochum (DE)**

(74) Representative: **Ungerer, Olaf
Eisenführ, Speiser & Partner
Arnulfstrasse 25
80335 München (DE)**

(56) References cited:
**WO-A-98/59471          US-B1- 6 285 412**

- **BERNHARD WIDROW AND SAMUEL D. STEARNS: "Adaptive Signal Processing" 1985 , PRENTICE-HALL , NEW JERSEY US XP002215366 (pages 99-101, 288-294) page 99 -page 101 page 288 -page 294; figures 11.25B, 11.26 page 292, paragraph 3**
- **SALEH A A M ET AL: "ADAPTIVE LINEARIZATION OF POWER AMPLIFIERS IN DIGITAL RADIO SYSTEMS" BELL SYSTEM TECHNICAL JOURNAL, AMERICAN TELEPHONE AND TELEGRAPH CO. NEW YORK, US, vol. 62, no. 4, PART 1, 1 April 1983 (1983-04-01), pages 1019-1033, XP002028354**
- **BERMUDEZ J C M ET AL: "Stability of non-Wiener solutions of the filtered LMS algorithm" 1996 IEEE INTERNATIONAL SYMPOSIUM ON CIRCUITS AND SYSTEMS. CIRCUITS AND SYSTEMS CONNECTING THE WORLD, ISCAS 96 (CAT. NO. 96CH35876), 1996 IEEE INTERNATIONAL SYMPOSIUM ON CIRCUITS AND SYSTEMS. CIRCUITS AND SYSTEMS CONNECTING THE WORLD. ISCAS 96, ATLANT, pages 372-375 vol. 2, XP002215365 1996, New York, NY, USA, IEEE, USA ISBN: 0-7803-3073-0**
- **WIDROW B.; STEARNS S. D.: "Adaptive Signal Processing (pp. 232-244)" 1985, PRENTICE HALL , LONDON , XP002381954**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 523 838 B1

EP 1 523 838 B1

**Description**

<u>FIELD OF THE INVENTION</u>

The present invention relates to a method and apparatus for equalizing a transmission characteristic of a signal processing circuitry, such as a direct conversion or heterodyne transmitter using e.g. an Orthogonal Frequency Division Multiplexing (OFDM) scheme.

<u>BACKGROUND OF THE INVENTION</u>

The Institute of Electrical and Electronics Engineers (IEEE) has developed a new specification 802.11a which represents the next generation of enterprise-class wireless local area networks (LANs). Among the advantages it has over current technologies are greater scalability, better interference immunity, and significantly higher speed, which simultaneously allows for higher bandwidth applications.

OFDM is used as a new encoding scheme which offers benefits over spread spectrum in channel availability and data rate. Channel availability is significant because the more independent channels that are available, the more scalable the wireless network becomes. The high data rate is accomplished by combining many lower-speed subcarriers to create one high-speed channel. A large (wide) channel can transport more information per transmission than a small (narrow) one. The subcarriers are transmitted in parallel, meaning that they are sent and received simultaneously. The receiving device processes these individual signals, each one representing a fraction of the total data that, together, make up the actual signal. With this many subcarriers comprising each channel, a tremendous amount of information can be sent at once.

The IEEE 802.11 a wireless LAN standard defines a high system performance and therefore requires a certain signal accuracy for the OFDM transmitter output. Taking the analog base-band and radio frequency (RF) filter imperfections into account it is necessary to equalize the signal stream before transmission. The performance of a transmitter output signal is strongly dependent on the analog filter accuracy. To reach high signal accuracy, expensive and precise filters have to be used. However, in high volume products it is recommended to have those filters as cheap as possible. It may be possible to insert low-cost and non-precise analog transmitter filters if an improved equalizer is installed to compensate large amplitude ripple and group delay in the transmitter pass-band.

The principles of the filtered-X LMS algorithm are explained in chapter 11 of the book of Bernhard Widrow and Samual D. Steams, "Adaptive Signal Processing", Prentice Hall, 1985.

A method of adaptive compensation of the distortions of a wireless communication system based on the filtered-X LMS algorithm is described In the international patent application with publication number WO 98/59471.

SUMMARY OF THE INVENTION

It is therefore an object of the present invention to provide an improved equalization method and apparatus, by means of which the signal accuracy at the transmitter output can be improved to thereby reduce filter requirements.

This object is achieved by a method of equalizing a transmission characteristic of a signal processing circuitry according to claim 1.

Additionally, the above object is achieved by an apparatus for equalizing a transmission characteristic of a signal processing circuitry according to claim 9.

Accordingly, an adaptive pre-equalizing scheme is provided which is able to leam imperfections of the signal processing circuitry and introduces a pre-distortion of the signal supplied to the signal processing circuitry. Thereby, the specifications or requirements of the signal processing circuitry can be reduced, or, alternatively, freedom is given to accept tighter specifications in future standards.

Moreover, due to the adaptive pre-equalization function, the solution is independent of the kind of signal processing circuitry, e.g. whether a direct conversion or heterodyne architecture is used. The approximation step may comprise the step of calculating an approximation of a least mean square gradient vector of said difference. The gradient vector may be calculated from a partial differential equation of a system cost function.

In particular, the input signal may be a digital signal and the output signal may be an analog signal.

The control values may be coefficients of an adaptive digital filter.

Additionally, the transmission characteristic may be approximated as a delay function. In this case, the delay of the delay function may correspond to the position of the maximum analog filter peak in the transmission characteristic.

Furthermore, the approximation means may be arranged to approximate said transmission characteristic as a delay function and to approximate said gradient by using a least mean square approximation function.

The signal processing circuitry may be a direct conversion or heterodyne transmitter architecture.

The equalizing apparatus may comprise a digital pre-equalizer means.

Advantageous further developments are defined in the dependent claims.

BRIEF DESCRIPTION OF THE DRAWINGS

In the following, the present invention will be described in greater detail based on a preferred embodiment with reference to the accompanying drawings, in which:

Fig. 1 shows a transmitter architecture comprising an equalizing function according to the preferred embodiment;

Fig. 2A shows a schematic diagram of a known adaptive post-equalization setup;

Fig. 2B shows a schematic diagram of an adaptive pre-equalization setup according to the preferred embodiment;

Fig. 3 shows a pre-equalization scheme according to the preferred embodiment; and

Fig. 4 shows a flow diagram based on the pre-equalization scheme according to the preferred embodiment.

DESCRIPTION OF THE PREFERRED EMBODIMENT

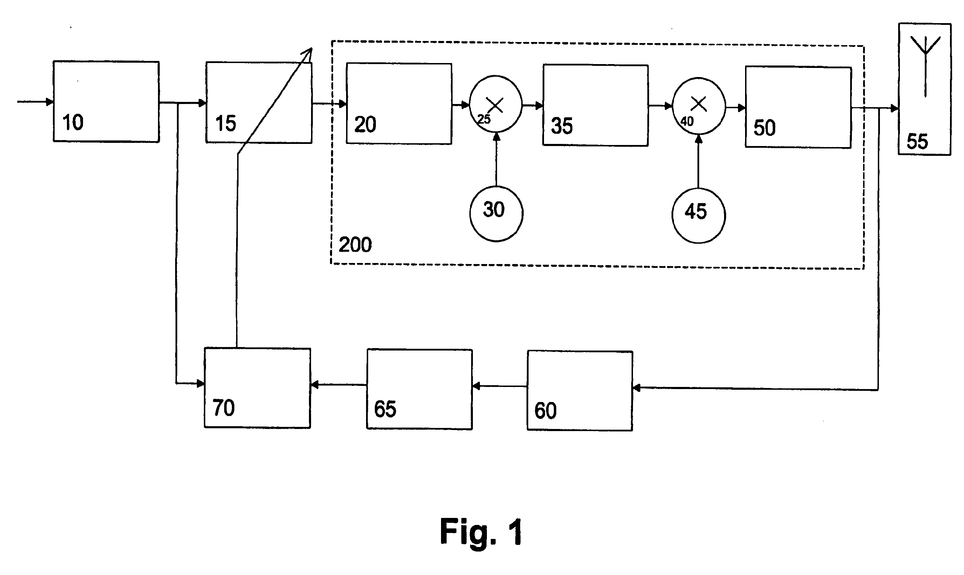

The preferred embodiment of the present invention will now be described on the basis of a heterodyne OFDM transmitter architecture for an IEEE 802.11a wireless LAN transmitter architecture as shown in Fig. 1.

According to Fig. 1, an input signal which may be based on a binary phase shift keying (BPSK), a quadrature phase shift keying (QPSK) or a quadrature amplitude modulation (QAM) is up-converted and low-pass filtered before being supplied in the digital domain to a digital intermediate frequency (IF) circuit 10 at an intermediate frequency of e.g. 20MHz. The generated IF signal is supplied to an adaptive pre-equalizer 15 arranged to pre-equalize the signal stream such that the distortions generated by non-ideal analog filter circuits of the following stages results again in an accurate signal stream. The pre-equalized signal is supplied to a transmitter circuitry 200, in which the signal is processed for transmission via a transmission antenna 55.

The transmitter circuitry 200 is based on a heterodyne transmitter architecture and comprises an analog base band circuit 20 in which the pre-equalized signal is prepared for transmission, e.g. by applying filtering, channel coding, pulse shaping or other suitable processing operations. Then, the processed base band signal is supplied to a first up-conversion stage comprising a modulator or multiplier 25 to which a signal obtained from a first oscillator 30 at a frequency of e.g. 1.5GHz is supplied in order to convert the signal frequency to the 1.5GHz range. Then, the up-converted signal is supplied to an analog IF filter circuit 35 to suppress unwanted frequency components generated by non-linear or other distortions. The filtered up-converted signal is then supplied to a second up-conversion stage comprising a second modulator or multiplier 40 to which an up-conversion signal at an adjustable range of 3.5 to 4.5 GHz is supplied from a controllable second oscillator 54. Thereby, the signal from the analog IF circuit 35 is finally up-converted to an adjustable frequency range of 3.5 to 4.5 GHz. This two-time up-converted radio frequency (RF) signal is supplied to a second filter circuit, i.e. an analog RF filter circuit 50 adapted to pass only the desired frequency range of the transmission signal supplied to the transmission antenna 55.

An envelope measurement circuit 60 which may be based on a clamping and/or low-pass operation or the like provides the envelope signal of the input signal of the transmission antenna 55. This envelope signal is then supplied to an analog/digital converter circuit 65 where it is converted into a digital signal stream supplied to a digital envelope error detection circuit 70. At the envelope error detection circuit 70, the analog/digital converted envelope signal is compared with the digital envelope of the output signal of the digital IF circuit 10 so as to calculate or derive an error value e[k]. In this connection, it is assumed that both envelope signals are synchronized. It is noted that corresponding synchronization circuits are not shown in Fig. 1.

Based on the obtained error value e[k], a predetermined number of control values, e.g. filter coefficients, is derived and supplied to the adaptive pre-equalizer 15 to thereby control the equalizing characteristic. Thus, distortions caused by the non-ideal transmitter filters 20, 35, 50 can be measured at the envelope error detection circuit 70 so as to adaptively control the pre-equalizing function. Accordingly, an adaptive decision-aided pre-equalization scheme is provided in the digital domain.

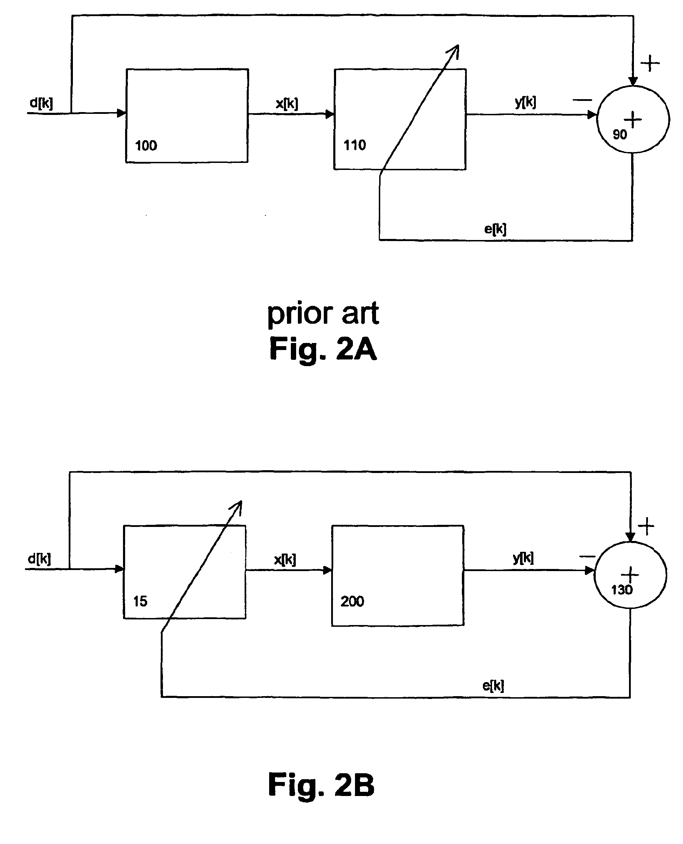

Fig. 2A shows a schematic diagram indicating a known adaptive post-equalization setup, wherein an input data signal first passes a channel 100 and thereafter an adaptive post-equalizer 110. Hence, the adaptive post-equalizer feedback loop comprising the post-equalizer 110 and a subtraction circuit 90 does not include the channel 100. The output signal y[k] of the post-equalizer 110 is subtracted in the subtraction circuit 90 from the input data signal d[k] to thereby obtain an error signal or value e[k] used to control the adaptive post-equalizer 110. The input data signal or vector d[k] first passes the channel 100 which may be characterized by a transfer characteristic or vector. The output signal x[k] of the channel 100 is multiplied with the adaptive filter characteristic or vector of the post-equalizer 110. The resulting scalar value y[k] is subtracted from the input sample d[k], and the obtained error value e[k] is used to update the filter coefficients of the adaptive post-equalizer 110 for the next input samples. It is thus not necessary to know the channel transfer characteristic or vector explicitly, because the input data x[k] of the post-equalizer 110 automatically contains the channel information. Thus only one unknown value, i.e. the optimal coefficient vector must be determined.

However, in the pre-equalization process according to the preferred embodiment of the present invention, the equalizer is put in front of the non-ideal analog filters or channel and hence includes the analog filters or channel in its feedback loop. Therefore, the calculation of the optimal coefficient vector is based on two unknown variables or vectors, the analog filter transfer characteristic or vector and the optimal coefficient set of the adaptive pre-equalizer.

Fig. 2B shows a corresponding adaptive pre-equalization setup which is based on the preferred embodiment shown in Fig. 1. According to Fig. 2B, the adaptive pre-equalizer 15 generates an input signal x[k] for the transmitter circuitry 200, wherein the output signal y[k] of the transmitter circuitry 200 is supplied to a subtractor or comparison circuitry 130 to which the input data signal d[k] is also supplied in order to obtain the error value e[k] based on which the pre-equalizer 15 is controlled.

The pre-equalization approach shown in Fig. 2B can be described based on the following equations:

$$x[k] = \underline{d}^T[k] \cdot \underline{w}[k] \qquad (1)$$

$$y[k] = \underline{x}^T[k] \cdot \underline{h}[k] \qquad (2)$$

In the above equations (1) and (2), $\underline{w}[k]$ denotes the coefficient or weight vector of the pre-equalizer 15, and $\underline{h}[k]$ denotes the transfer vector of the transmission circuitry 200.

Based on the above two equations (1) and (2), the error value e[k] can be obtained based on following equation.

$$e[k] = d[k] - y[k] = d[k] - \underline{x}^T[k] \cdot \underline{h}[k] \qquad (3)$$

Inserting equation (1) to equation (3) results in the equation:

$$e[k] = d[k] - (\underline{D}^T[k] \cdot \underline{w}[k])^T \cdot \underline{h}[k] \qquad (4)$$

According to the preferred embodiment of the present invention, the above equation (4) with its two unknown vectors can be solved based on an approximation and a single adaptation processing. The approximation can be performed for a gradient vector of the error value e[k]. In particular, a least mean square (LMS) gradient vector can be determined. The starting point for the determination of the gradient approximation is the above equation (4). The following equation describes a system cost function J{$\underline{w}[k]$} used for the gradient approximation:

$$J\{\underline{w}[k]\} = E\langle e^2[k]\rangle = E\langle(d[k] - y[k])^2\rangle = E\langle(d[k] - \underline{w}^T[k] \cdot \underline{D}[k] \cdot \underline{h}[k])^2\rangle \qquad (5)$$

Consequently, the gradient vector of the error performance function can be obtained on the basis of a partial differentiation of the above system cost function. This leads to the following equation:

$$\nabla\{E\langle e^2[k]\rangle\} = -2 \cdot E\langle \underline{e}[k] \cdot \underline{x}^\sim[k]\rangle \qquad (6)$$

wherein $\underline{x}^\sim[k]$ denotes a direction vector of the gradient, which corresponds to an assessment of the data matrix $\underline{D}[k]$ with the transfer vector $\underline{h}[k]$ of the transmitter circuitry 200. This can be described on the basis of the following equation:

$$\underline{x}^{\sim}[k] = \underline{D}[k] \cdot \underline{h}[k] = h_\tau \cdot \underline{d}[k - \tau] = \underline{d}[k - \tau] \qquad (7)$$

wherein the data matrix $\underline{D}[k]$ represents a transformation matrix, which rotates the non-ideal transfer vector $\underline{h}[k]$ of the transmitter circuitry 200, $h_\tau$ provides the approximated analog filter transfer value, e.g. $h_\tau = 1$ (while all other coefficients of the transfer vector are set to "0").

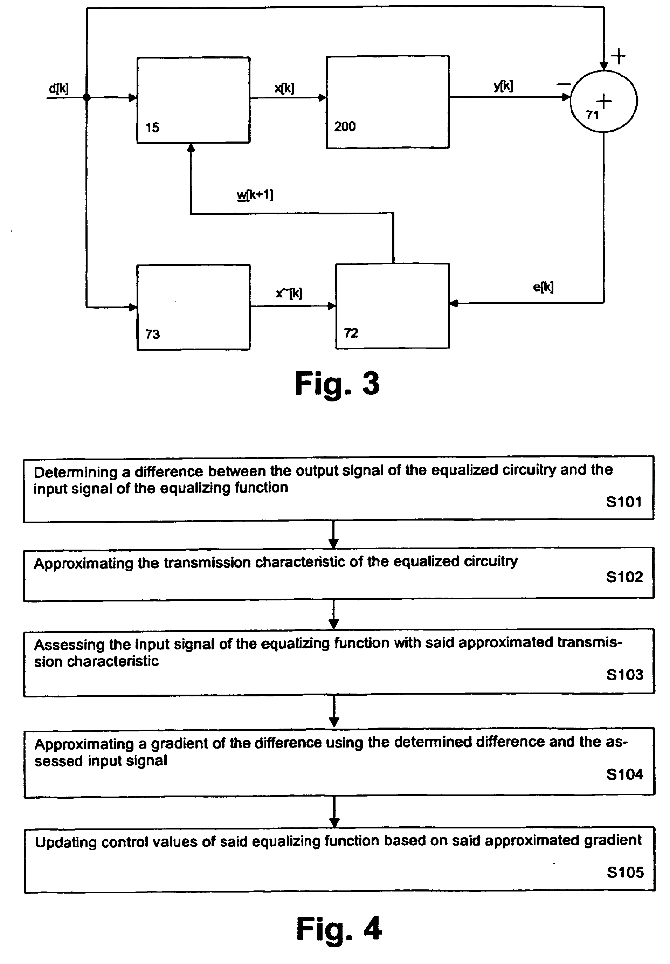

Fig. 3 shows an implementation example of the envelope error detection circuitry 70 in Fig. 1 based on the adaptive pre-equalization setup scheme of Fig. 2B. It is noted that in Fig. 3, the envelope measurement circuit 60 and the analog/digital converter 65 have been omitted for reasons of simplicity. Thus, the output value y[k] of the transmitter circuitry 200 corresponds to the digitized output value of the analog/digital converter 65.

In Fig. 3, the output signal y[k] is supplied to a subtraction circuit 71 which generates the error value e[k]. This error value e[k] is supplied to an adaptation circuit 72 arranged to determine an updated or new coefficient vector $\underline{w}[k + 1]$ for controlling the pre-equalizer 15. Furthermore, an approximation circuit 73 is provided for approximating the transfer characteristic or transfer vector $\underline{h}[k]$ of the transmitter circuitry 200. Accordingly, the output signal of the approximation circuit 73 corresponds to the above signal vector $\underline{x}^{\sim}[k]$. In view of the fact that the transfer vector $\underline{h}[k]$ is approximated in the approximation circuit 73, only one unknown variable has to be determined in the adaptation circuit 72.

In the following, the derivation of the pre-equalization coefficient vector $\underline{w}[k + 1]$ is described.

The signal vector $\underline{x}^{\sim}[k]$ can be obtained by implementing a copy of the analog filter characteristic of the transmitter circuitry 200 in the approximation circuit 73. However, this would also require an identification process of this analog filter characteristic. As an advantageous simplified solution, the approximation circuit 73 may be adapted to implement the filter characteristic of the transmitter circuitry 200 as a simple delay block or function. Then, the required delay value corresponds to the analog filter delay $\tau$, i.e. the position of the maximum filter peak of the analog filter characteristic of the transmitter circuitry 200. This maximum peak can then be replaced by a value "1" in the transfer vector $\underline{h}[k]$, while the other vector components can be set to "0".

The analog filter characteristic of the transmitter circuitry 200 can thus be approximated by a simple FIR (Finite Impulse Response) filter with estimated coefficient $\underline{h}_\tau[k] = $ "1" and all other coefficients set to "0".

This approximation leads to a simplification of the above equation (6), as follows:

$$\nabla\{E^{\#}\langle e^2[k]\rangle\} = -2 \cdot e[k] \cdot \underline{d}[k - \tau] \qquad (8)$$

Based on the simplified equation (8), the coefficients of the pre-equalizer 15 can be updated on the basis of the following equation:

$$\underline{w}[k + 1] = \underline{w}[k] + \mu \cdot e[k] \cdot \underline{d}[k - \tau] \qquad (9)$$

Using the above approximation, a straight forward calculation or determination of the coefficients of the adaptive pre-equalizer 15 is possible in the adaptation circuit 72.

Fig. 4 shows a more general flow diagram of the steps of the above adaptive pre-equalization scheme according to the preferred embodiment.

In step S101, a difference between the output signal y[k] of the equalized circuitry, i.e. the transmission circuitry 200, and the input signal d[k] of the equalizing function of the pre-equalizer 15 is determined. This difference corresponds to the error value e[k] and may be based on a comparison of the signal envelopes as explained earlier. However, any other signal parameter can be used for obtaining the difference. Then, in step S102, the transmission characteristic of the equalized circuitry is approximated. Here, any approximation can be applied so as to derive one of the two unknown variables in equation (4). Then, the input signal of the equalizing function is assessed with the approximated transmission characteristic (step S103). Based on the determined difference and the assessed input signal, a gradient of the difference is approximated e.g. based on equation (8) (step S104). Having derived the gradient of the difference, the control values or coefficients of the pre-equalizing function are updated in step S105 based on the approximated gradient.

The present invention provides a proposal for an adaptive pre-equalization approach which may be used e.g. for an analog filter characteristic of a transmitter circuitry or any other signal processing circuitry. The equalization is based on an approximation, e.g. an LMS approximation, and does not require a system identification process with respect to the analog filter characteristic, but approximates this characteristic by a simple delay block.

Thereby, a highly flexible approach is provided, since variations in the characteristic of the transmitter circuitry 200 do not have to be taken into account. In fact, imperfections are learned, a model is made, and the model is used in pre-distorting the signal before applying it to the transmitter chain. Thereby, even changes in the transmitted signal wave form due to transmitter imperfections can be compensated. The invention gives the freedom to accept or promote tighter specifications with respect to the magnitude of the error value or vector in future standards. Furthermore, multipath delay spread tolerance can be improved by reducing intersymbol interference (ISI) which results from group delay equalization. The proposed adaptive low-complexity solution suites very well to volume production needs allowing larger tolerances for specifications. This may lead to an improved production yield.

It is noted that the present invention is not restricted to the preferred embodiment described above but can be used in any signal processing circuitry for reducing signal distortions. The comparison can be performed for any signal parameter suitable to obtain a difference caused by distortions of the signal processing circuitry. Similarly, the control values for controlling the pre-equalizer may be obtained by any suitable approximation for obtaining a gradient of the difference value or error value. The pre-equalization may be adapted for use in heterodyne architectures or direct conversion architectures. It may as well be used for compensating amplitude imperfections, e.g. in-phase (1) and quadrature phase (Q) amplitude imperfections, for direct conversion architectures. The preferred embodiments may thus vary within the scope of the attached claims.

## Claims

1. A method of pre-equalizing a transmission characteristic of a signal processing circuitry (200), said method comprising the steps of:

   a) obtaining a difference between an output signal of said signal processing circuitry (200) and an input signal of a pre-equalizing function (15), wherein said input signal is filtered by said pre-equalizing function (15) and the output signal of said pre-equalizing function (15) is input to said signal processing circuitry (200);
   b) calculating an approximation of the gradient of the expectation of the square of said difference based on said obtained difference and an approximation of said transmission characteristic; and
   c) updating control values of said pre-equalizing function (15) based on said approximated gradient,
   d) wherein said transmission characteristic is approximated as a delay function.

2. A method according to claim 1, wherein said gradient approximating step comprises the step of calculating an approximation of a least mean square gradient vector of said difference.

3. A method according to claim 2, wherein said gradient vector is calculated from a partial differential equation of a system cost function.

4. A method according to any one of the preceding claims, wherein said input signal is a digital signal and said output signal is an analog signal.

5. A method according to any one of the preceding claims, wherein said control values are coefficients of an adaptive digital filter.

6. A method according to any one of the preceding claims, wherein the delay of said delay function corresponds to the position of the maximum analog filter peak of said transmission characteristic.

7. A method according to claim 6, wherein said gradient vector is calculated using the following equation:

$$\nabla\{E\} = -2e[k] \cdot \underline{d}[k - \tau],$$

wherein

$\nabla\{E\}$ denotes said gradient vector,
$e[k]$ denotes said obtained difference, and
$\underline{d}[k - \tau]$ denotes a vector representation of said input signal assessed by said delay approximation of said transmission characteristic.

8. A method according to claim 7, wherein filter coefficients are updated in said updating step based on the following equation:

$$\underline{w}[k + 1] = \underline{w}[k] + \mu e[k] \cdot \underline{d}[k - \tau],$$

wherein

$\underline{w}[k + 1]$ denotes a vector representation of updated filter coefficients,
$\underline{w}[k]$ denotes a vector representation of current filter coefficients, and
$\mu$ denotes a predetermined proportionality factor.

9. An apparatus for pre-equalizing a transmission characteristic of a signal processing circuitry (200), said apparatus comprising:

a) comparing means (71) for obtaining a difference between an output signal of said signal processing circuitry (200) and an input signal of a pre-equalizing means (15), wherein said input signal is filtered by said pre-equalizing means (15) and the output signal of said pre-equalizing means (15) is input to said signal processing circuitry (200);
b) approximation means (72, 73) for calculating an approximation of the gradient of the expectation of the square of said difference based on said obtained difference and an approximation of said transmission characteristic; and
c) updating means (72) for obtaining control values supplied to said pre-equalizing means (15), based on said approximated gradient;
d) wherein said approximation means (72, 73) is arranged to approximate said transmission characteristic as a delay function (73).

10. An apparatus according to claim 9, wherein said approximation means (72, 73) is arranged to approximate said gradient by using a least mean square approximation function.

11. An apparatus according to any one of claims 9 or 10, wherein said signal processing circuitry is a direct conversion or heterodyne transmitter architecture (200).

12. An apparatus according to any one of claims 9 to 11, wherein said apparatus comprises a digital pre-equalizer means (15).

**Patentansprüche**

1. Vorverzerrungsverfahren für eine Übertragungskennlinie eines Signalverarbeitungsschaltkreises (200), wobei das Verfahren die Schritte umfasst:

a) Erhalten einer Differenz zwischen einem Ausgabesignal, des Signalverarbeitungsschaltkreises (200) und einem Eingabesignal einer Vorverzerrungsfunktion (15), wobei das Eingangssignal durch die Vorverzerrungsfunktion (15) gefiltert wird und das Ausgabesignal der Vorverzerrungsfunktion (15) eine Eingabe für den Signalverarbeitungsschaltkreis (200) ist;
b) Berechnen einer Näherung des Gradienten des Erwartungswerts des Quadrats der Differenz basierend auf der erhaltenen Differenz und einer Näherung der Übertragungskennlinie; und
c) Aktualisieren von Steuerwerten der Vorverzerrungsfunktion (15) basierend auf dem genäherten Gradienten,
d) wobei die Übertragungskennlinie als eine Verzögerungsfunktion angenähert wird.

2. Verfahren gemäß Anspruch 1, wobei der Gradientennäherungsschritt den Schritt umfasst Berechnen einer Näherung eines "Least Mean Square"-Gradientenvektors der Differenz umfasst.

3. Verfahren gemäß Anspruch 2, wobei der Gradientenvektor aus einer partiellen Differenzialgleichung einer Systemkostenfunktion berechnet wird.

4. Verfahren gemäß einem der vorhergehenden Ansprüche, wobei das Eingangssignal ein digitales Signal ist und das Ausgangssignal ein analoges Signal ist.

5. Verfahren gemäß einem der vorhergehenden Ansprüche, wobei die Steuerwerte Koeffizienten eines adaptiven, digitalen Filters sind.

6. Verfahren gemäß einem der vorhergehenden Ansprüche, wobei die Verzögerung der Verzögerungsfunktion der Position des maximalen analogen Filterspitzenwerts der Übertragungskennlinie entspricht.

7. Verfahren gemäß Anspruch 6, wobei der Gradientenvektor unter Verwendung der folgenden Gleichung berechnet wird:

$$\nabla\{E\} = -2e[k] \cdot \underline{d}[k - \tau],$$

wobei

$\nabla\{E\}$ den Gradientenvektor bezeichnet,
$e[k]$ die erhaltene Differenz bezeichnet, und
$\underline{d}[k - \tau]$ eine Vektordarstellung des Eingabesignals bezeichnet, bewertet durch die Verzögerungsnäherung der Übertragungskennlinie.

8. Verfahren gemäß Anspruch 7, wobei Filterkoeffizienten in dem Aktualisierungsschritt basierend auf der folgenden Gleichung aktualisiert werden:

$$\underline{w}[k + 1] = \underline{w}[k] + \mu e[k] \cdot \underline{d}[k - \tau],$$

wobei

$\underline{w}[k + 1]$ eine Vektordarstellung der aktualisierten Koeffizienten bezeichnet,
$\underline{w}[k]$ eine Vektordarstellung der aktuellen Filterkoeffizienten bezeichnet, und
$\mu$ einen vorbestimmten Proportionalitätsfaktor bezeichnet.

9. Vorrichtung zum Vorverzerren einer Übertragungskennlinie eines Signalsverarbeitungsschaltkreises (200), wobei die Vorrichtung umfasst:

a) Vergleichsmittel (71) zum Erhalten einer Differenz zwischen einem Eingabesignal des Signalverarbeitungsschaltkreises (200) und einem Eingabesignal eines Vorverzerrungsmittels (15), wobei das Eingabesignal durch die Vorverzerrungsmittel (15) gefiltert wird und das Ausgabesignal der Vorverzerrungsmittel (15) in den Signalverarbeitungsschaltkreis (200) eingegeben wird;
b) Näherungsmittel (72, 73) zum Berechnen einer Näherung des Gradienten des Erwartungswerts des Quadrats der Differenz basierend auf der erhaltenen Differenz und einer Näherung der Übertragungskennlinie; und
c) Aktualisierungsmittel (72) zum Erhalten von Steuerwerten, die in die Vorverzerrungsmitteln (15) eingegeben werden, basierend auf dem genäherten Gradienten;
d) wobei die Näherungsmittel (72, 73) eingerichtet sind, die Übertragungskennlinie als eine Verzögerungsfunktion (73) anzunähern.

10. Vorrichtung gemäß Anspruch 9, wobei die Näherungsmittel (72, 73) eingerichtet sind, den Gradienten unter Verwendung einer "Least Mean Square"-Näherungsfunktion zu nähern.

11. Vorrichtung gemäß einen der vorhergehenden Ansprüchen 9 oder 10, wobei der Signalverarbeitungsschaltkreis eine Direktumsetzungs- oder Heterodyn-Senderarchitektur (200) besitzt.

12. Vorrichtung gemäß einem der Ansprüche 9 bis 11, wobei die Vorrichtung digitale Vorverzerrungsmittel (15) umfasst.

**Revendications**

1. Procédé de pré-égalisation d'une caractéristique de transmission d'un montage de circuits de traitement de signaux (200), ledit procédé comprenant les étapes consistant à :

   a) obtenir une différence entre un signal de sortie dudit montage de circuits de traitement de signaux (200) et un signal d'entrée d'une fonction de pré-égalisation (15), dans lequel ledit signal d'entrée est filtré par ladite fonction de pré-égalisation (15) et le signal de sortie de ladite fonction de pré-égalisation (15) est entré dans ledit montage de circuits de traitement de signaux (200) ;
   b) calculer une estimation du gradient de l'estimation du carré de ladite différence sur la base de ladite différence obtenue et d'un calcul approximatif de ladite caractéristique de transmission ; et
   c) mettre à jour des valeurs de commande de ladite fonction de pré-égalisation (15) sur la base dudit gradient calculé approximativement,
   d) dans lequel ladite caractéristique de transmission est calculée approximativement en tant qu'une fonction de retard.

2. Procédé selon la revendication 1, dans lequel ladite étape de calcul approximatif de gradient comprend l'étape consistant à calculer une estimation d'un vecteur de gradient à moindres carrés moyens de ladite différence.

3. Procédé selon la revendication 2, dans lequel ledit vecteur de gradient est calculé à partir d'une équation différentielle partielle d'une fonction de coût de système.

4. Procédé selon l'une quelconque des revendications précédentes, dans lequel ledit signal d'entrée est un signal numérique, et ledit signal de sortie est un signal analogique.

5. Procédé selon l'une quelconque des revendications précédentes, dans lequel lesdites valeurs de commande sont des coefficients d'un filtre numérique adaptatif.

6. Procédé selon l'une quelconque des revendications précédentes, dans lequel le retard de ladite fonction de retard correspond à la position du pic de filtre analogique maximum de ladite caractéristique de transmission.

7. Procédé selon la revendication 6, dans lequel ledit vecteur de gradient est calculé en utilisant l'équation suivante :

$$\nabla\{E\} = -2e[k] \bullet \underline{d}[k - \tau]$$

dans laquelle

   $\nabla\{E\}$ désigne ledit vecteur de gradient,
   $e[k]$ désigne ladite différence obtenue, et
   $\underline{d}[k - \tau]$ désigne une représentation de vecteur dudit signal d'entrée évaluée par ledit calcul approximatif de retard de ladite caractéristique de transmission.

8. Procédé selon la revendication 7, dans lequel des coefficients de filtre sont mis à jour au cours de ladite étape de mise à jour sur la base de l'équation suivante :

$$\underline{w}[k + 1] = \underline{w}[k] + \mu e[k] \bullet \underline{d}[k - \tau]$$

dans laquelle

   $\underline{w}[k + 1]$ désigne une représentation de vecteur de coefficients de filtre mis à jour,
   $\underline{w}[k]$ désigne une représentation de vecteur de coefficients de filtre actuels, et
   $\mu$ désigne un facteur de proportionnalité prédéterminé.

9. Appareil de pré-égalisation d'une caractéristique de transmission d'un montage de circuits de traitement de signaux (200), ledit appareil comprenant :

a) des moyens de comparaison (71) pour obtenir une différence entre un signal de sortie dudit montage de circuits de traitement de signaux (200) et un signal d'entrée de moyens de pré-égalisation (15), dans lequel ledit signal d'entrée est filtré par lesdits moyens de pré-égalisation (15) et le signal de sortie desdits moyens de pré-égalisation (15) est entré dans ledit montage de circuits de traitement de signaux (200) ;

b) des moyens de calcul approximatif (72, 73) pour calculer une estimation du gradient de l'estimation du carré de ladite différence sur la base de ladite différence obtenue, et une estimation de ladite caractéristique de transmission ; et

c) des moyens de mise à jour (72) pour obtenir des valeurs de commande fournies aux dits moyens de pré-égalisation (15), sur la base dudit gradient calculé approximativement ;

d) dans lequel lesdits moyens de calcul approximatif (72, 73) sont configurés pour calculer approximativement ladite caractéristique de transmission en tant qu'une fonction de retard (73).

10. Appareil selon la revendication 9, dans lequel lesdits moyens de calcul approximatif (72, 73) sont configurés pour calculer approximativement ledit gradient en utilisant une fonction de calcul approximatif des moindres carrés moyens.

11. Appareil selon l'une quelconque des revendications 9 ou 10, dans lequel ledit montage de circuits de traitement de signaux est une architecture d'émetteur à conversion directe ou hétérodyne (200).

12. Appareil selon l'une quelconque des revendications 9 à 11, dans lequel ledit appareil comprend des moyens de pré-égalisation (15).

Fig. 1

prior art
**Fig. 2A**

**Fig. 2B**

**Fig. 3**

| |
|---|
| Determining a difference between the output signal of the equalized circuitry and the input signal of the equalizing function |
| S101 |

| |
|---|
| Approximating the transmission characteristic of the equalized circuitry |
| S102 |

| |
|---|
| Assessing the input signal of the equalizing function with said approximated transmission characteristic |
| S103 |

| |
|---|
| Approximating a gradient of the difference using the determined difference and the assessed input signal |
| S104 |

| |
|---|
| Updating control values of said equalizing function based on said approximated gradient |
| S105 |

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9859471 A

**Non-patent literature cited in the description**

- **BERNHARD WIDROW ; SAMUAL D. STEAMS.** Adaptive Signal Processing. Prentice Hall, 1985